# FASCICULE DE BREVET EUROPEEN

(11) **EP 1 533 225 B1**
(45) Date de publication et mention de la délivrance du brevet: **21.02.2007**
(21) Numéro de dépôt: 04105909.8
(22) Date de dépôt: 19.11.2004
(51) Int. Cl.: B64C 1/10, B64D 11/00

(54) **Cloison pour aéronef destinée à séparer une partie cargo d'un cockpit ou d'un compartiment passager**
Schottwand für Flugzeug, die einen Frachtraum von einem Cockpit oder von einem Passagierraum trennt
Bulkhead for aircraft to separate a cargo area from a cockpit or a passenger compartment

(30) Priorité: 24.11.2003 FR 0350892
(43) Date de publication de la demande: 25.05.2005
(73) Titulaire: AIRBUS France, 31060 Toulouse (FR)
(72) Inventeur: Bouchet, Eric, 31840, AUSSONNE (FR); Mahieu, Benjamin, 31500, TOULOUSE (FR); Juillen, Lionel, 31300, TOULOUSE (FR); Vinches, Frédéric, 31330, LARRA (FR)
(74) Mandataire: Poulin, Gérard

(56) Documents cités:
- GB-A- 505 245
- GB-A- 534 316
- GB-A- 824 823
- US-A- 4 957 250
- US-A- 5 085 382
- US-A- 5 482 230

## Description

### DOMAINE TECHNIQUE

La présente invention se rapporte de façon générale au domaine des dispositifs de séparation d'une partie cargo et d'un cockpit ou d'un compartiment passager d'un aéronef, celui-ci étant utilisé pour transporter du fret.

### ETAT DE LA TECHNIQUE ANTERIEURE

Dans un aéronef conçu et utilisé pour transporter du fret dans une partie cargo, il est généralement prévu un dispositif de séparation entre cette partie cargo et le cockpit de l'aéronef lorsque ce dernier est entièrement utilisé comme cargo, ou bien un dispositif de séparation entre cette même partie cargo et un compartiment passager lorsque l'aéronef concerné est à usage mixte, à savoir destiné à transporter à la fois du fret et des passagers.

De façon connue, le dispositif de séparation a pour but de protéger les passagers, ou les membres de l'équipage suivant la configuration de l'aéronef concerné, en étant conçu de manière à pouvoir assurer l'arrêt de la charge transportée lorsque celle-ci est soumise à une accélération inférieure ou égale à une accélération maximale prévue dans le domaine de vol de ce même aéronef.

Dans l'art antérieur, plusieurs solutions ont déjà été proposées pour réaliser un tel dispositif de séparation.

En effet, une première solution a tout d'abord consisté à concevoir un filet pour retenir le fret afin qu'il ne pénètre pas dans le cockpit ou dans le compartiment passager lors d'une accélération de cette charge transportée, comme cela est notamment décrit dans le document US-A-6 244 803.

Cependant, cette solution présente un inconvénient majeur, en ce sens que le filet peut se déformer de façon sensible sous l'effet des efforts appliqués par la charge transportée retenue par ce filet, lors d'une accélération de cette charge. A titre indicatif, cette déformation peut atteindre plusieurs dizaines de centimètres lorsque l'aéronef est un gros porteur transportant des charges importantes. Ainsi, il est clair que la partie du cockpit ou du compartiment passager, dans laquelle le filet peut se déformer suite aux efforts transmis par la charge transportée en appui, ne peut naturellement pas être utilisée de façon utile. Par conséquent, l'utilisation d'un tel filet se traduit directement par un encombrement non-optimisé du cockpit ou du compartiment passager de l'aéronef.

Pour faire face à ce problème, il a été proposé une autre solution consistant à remplacer le filet par une cloison rigide à faible déformation, du type plaque métallique d'épaisseur relativement élevée. Néanmoins, si l'emploi de cette cloison permet avantageusement d'engendrer une diminution de l'encombrement directement relatif à l'utilisation du dispositif de séparation, elle augmente de façon conséquente la masse de ce dernier par rapport à la solution initiale du filet. De plus, il est bien entendu précisé que plus la charge transportée est importante, plus la masse de la cloison doit également être importante, ce qui rend donc cette solution que très peu satisfaisante.

Par ailleurs, afin de diminuer la masse du dispositif de séparation, notamment dans le but évident de pouvoir augmenter la charge transportée, certaines cloisons ont été équipées d'une structure alvéolaire, par exemple en agençant celle-ci entre deux parois extérieures de la cloison.

Cependant, principalement lorsque l'aéronef concerné est un gros porteur et que le fret transporté dispose d'une masse importante, la masse de la cloison munie d'une structure alvéolaire reste toujours relativement conséquente, en raison de la résistance mécanique que celle-ci doit présenter afin de protéger les membres d'équipages situés dans le cockpit, ou les passagers présents à l'intérieur de leur compartiment.

Document US 4 957 250 décrit une cloison selon le préambule de la revendication 1.

### EXPOSÉ DE L'INVENTION

L'invention a donc pour but de proposer une cloison pour aéronef destinée à séparer une partie cargo d'un cockpit ou d'un compartiment passager de cet aéronef, cette cloison remédiant au moins partiellement aux inconvénients mentionnés ci-dessus relatifs aux réalisations de l'art antérieur.

Le but de l'invention est également de présenter un aéronef comportant au moins une telle cloison.

Pour ce faire, l'invention a tout d'abord pour objet une cloison pour aéronef destinée à séparer une partie cargo d'un cockpit ou d'un compartiment passager de cet aéronef, cette cloison comprenant une structure ondulée définissant une pluralité d'ondulations à section sensiblement à omega, chaque ondulation s'étendant sensiblement dans un sens de la hauteur de la cloison, et au moins un élément raidisseur étant rapporté sur la structure ondulée.

De façon avantageuse, la structure ondulée prévue pour réaliser la cloison selon l'invention permet à celle-ci de présenter une masse globale diminuée par rapport à celle des cloisons à structure alvéolaire de l'art antérieur exposées ci-dessus, tout en étant capable de protéger les occupants de l'aéronef d'une même charge transportée. A ce titre, il est indiqué que la présence d'au moins un élément raidisseur sur la structure ondulée contribue fortement à la réduction de la masse globale de la cloison.

Il est noté que les divers paramètres géométriques de la cloison selon l'invention, tels que les dimensions du/des éléments constitutifs de la structure ondulée, sont déterminés de manière à obtenir une cloison suffisamment résistante pour supporter la charge transportée maximale, soumise à une accélération au moins égale à l'accélération maximale qu'elle peut subir dans le domaine du vol défini pour l'aéronef concerné.

A titre d'exemple illustratif, en connaissant les efforts maximaux à supporter ainsi que les dimensions de la cloison, les différentes caractéristiques de celle-ci peuvent être déterminées de façon analytique, par calculs successifs en utilisant par exemple la méthode des éléments finis, ou encore par une méthode d'optimisation topologique.

En outre, la cloison selon la présente invention présente l'avantage d'offrir des déformations extrêmement faibles similaires à celles rencontrées dans l'art antérieur avec une cloison classique à structure alvéolaire, ces déformations étant par ailleurs largement inférieures à celles relatives à la solution de filet. Par conséquent, l'encombrement du cockpit de l'aéronef ou du compartiment passager de ce dernier peut être sensiblement optimisé.

De préférence, chacune de la pluralité d'ondulations à section sensiblement en oméga est réalisée à l'aide d'une pluralité de tôles planes.

De manière préférentielle, chaque élément raidisseur s'étend sensiblement dans le sens de la hauteur de la cloison.

A ce titre, chaque élément raidisseur peut prendre la forme d'une tôle plane.

En outre, la structure ondulée comprend une première surface extérieure ainsi qu'une seconde surface extérieure opposée à la première surface extérieure, et chacune des première et seconde surfaces extérieures présente une alternance de reliefs et de creux.

Avec une telle configuration, il est possible de concevoir la cloison de sorte qu'elle comporte en outre au moins une paroi extérieure en appui contre les reliefs de l'une des surfaces extérieures de la structure ondulée. Ici encore, chaque paroi extérieure peut prendre la forme d'une tôle plane.

Préférentiellement, la structure ondulée est agencée entre deux parois extérieures disposées de façon parallèle.

Enfin, on peut également prévoir qu'au moins un élément raidisseur secondaire est rapporté sur au moins une paroi extérieure, et que la cloison est réalisée en fibres de carbone.

En outre, l'invention a pour objet un aéronef comportant au moins une cloison séparant une partie cargo d'un cockpit ou d'un compartiment passager de cet aéronef, au moins une cloison séparant une partie cargo du cockpit ou d'un compartiment passager étant une cloison telle que celle présentée ci-dessus et également objet de la présente invention.

De préférence, au moins une cloison séparant une partie cargo du cockpit ou d'un compartiment passager est fixée au fuselage de cet aéronef uniquement par un bord supérieur et un bord inférieur de la cloison. Cette spécificité a pour avantage de réduire les efforts transmis au fuselage par les dispositifs de fixation utilisés.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue schématique partielle de côté d'un aéronef, comprenant une cloison selon un premier mode de réalisation préféré de la présente invention, cette cloison séparant une partie cargo d'un compartiment passager ;
- la figure 2 représente une vue en perspective de la cloison représentée sur la figure 1 ;
- la figure 3a représente une vue partielle de dessus de la figure 2 ;
- la figure 3b représente également une vue partielle de dessus de la figure 2, lorsque la cloison se présente sous une forme alternative du premier mode de réalisation préféré ;
- la figure 4 représente une vue de dessus d'une cloison selon un second mode de réalisation préféré de la présente invention ;
- la figure 5 représente une vue en coupe prise le long de la ligne V-V de la figure 4 ; et
- la figure 6 représente une vue partielle en perspective d'un dispositif de fixation de la cloison.

### EXPOSÉ DÉTAILLÉ DE MODES DE RÉALISATION PRÉFÉRÉS

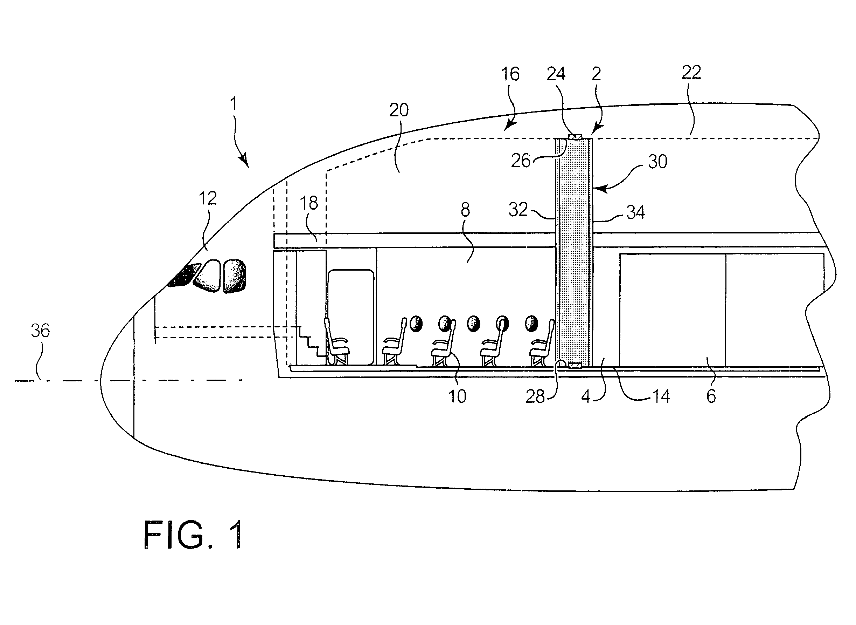

En référence à la figure 1, il est représenté un aéronef 1 à usage mixte, à savoir destiné à transporter à la fois du fret et des passagers, cet aéronef 1 étant équipé d'une cloison 2 selon un premier mode de réalisation préféré de la présente invention.

Comme indiqué précédemment, il est noté que l'aéronef 1 est également objet de la présente invention. Dans l'exemple préférentiel représenté sur cette figure 1, l'aéronef 1 est conçu de telle sorte que la cloison 2 est interposée entre une partie cargo 4 à l'intérieur de laquelle peut être placé le fret 6 également appelé charge transportée, et un compartiment passager 8 placé à l'avant de la partie cargo 4 et pourvu d'une pluralité de sièges 10. Bien entendu, dans un cas non représenté où l'aéronef 1 serait uniquement conçu pour transporter du fret 6, et ne présenterait donc plus de compartiment passager 8, la cloison 2 serait alors placée entre la partie cargo 4 et un cockpit 12 lui étant adjacent.

Comme on peut l'apercevoir sur la figure 1, la cloison 2 s'étend de façon verticale entre un plancher principal 14 et une partie supérieure d'un fuselage 16 de l'aéronef 1, en traversant un plancher d'étage 18 parallèle au plancher principal 14 et situé au-dessus de celui-ci. A ce titre, il est indiqué que dans la description, les termes « vertical » et « horizontal » signifient respectivement perpendiculaire et parallèle au plancher principal 14 de l'aéronef 1.

Naturellement, la cloison 2 pourrait ne s'étendre qu'entre le plancher principal 14 et le plancher d'étage 18 délimitant tous les deux la partie cargo 4 et le compartiment passager 8, ou encore qu'entre ce plancher d'étage 18 et la partie supérieure du fuselage 16, sans sortir du cadre de l'invention. En revanche, dans l'exemple préférentiel représenté sur la figure 1 où la cloison 2 s'étend au-delà du plancher d'étage 18, la portion de cette cloison 2 agencée entre ce plancher d'étage 18 et le fuselage 16 sépare deux enceintes 20 et 22 qui pourraient être utilisées pour stocker le fret 6, au même titre que la partie cargo 4 précédemment décrite. A cet égard, il est noté que l'on pourrait également prévoir deux cloisons 2 distinctes respectivement destinées à équiper chacun des deux niveaux séparés par le plancher d'étage 18. Dans un tel cas, les deux cloisons 2 ne seraient bien entendu pas nécessairement superposées selon la hauteur.

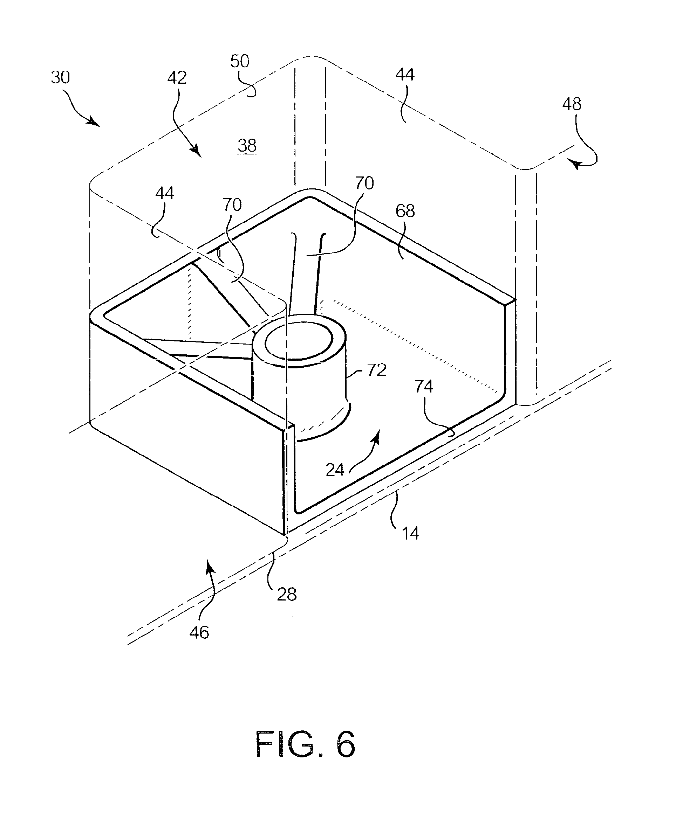

Dans le but de solidariser la cloison 2 au reste de la structure de l'aéronef 1, il est prévu des dispositifs de fixation 24 agencés entre cette cloison 2 et notamment le fuselage 16, un exemple de réalisation pour le dispositif de fixation 24 étant représenté sur la figure 6 et décrit ultérieurement.

Cependant, les dispositifs 24 pourraient par exemple être du type comprenant des butées mécaniques montées à l'aide de boulons sur des rails perpendiculaires à la cloison 2 et solidarisés sur celle-ci. Dans ce cas, les butées sont alors de préférence destinées à reposer contre le fuselage 16 ou contre le plancher principal 14, et sont assemblées à l'un de ces éléments 14,16 également à l'aide de boulons.

Ainsi, afin de réduire les efforts transmis à ce fuselage 16 par les dispositifs de fixation 24, il peut effectivement être prévu que la cloison 2 soit uniquement fixée au niveau de son bord supérieur 26 à la partie supérieure du fuselage 16, et au niveau de son bord inférieur 28 au plancher principal 14.

Toujours en référence à la figure 1, la cloison 2 selon le premier mode de réalisation préféré de la présente invention est exclusivement constituée d'une structure ondulée 30 sur laquelle est rapporté au moins un élément raidisseur (non visible sur cette figure 1), cette structure 30 présentant un côté avant 32 délimitant le compartiment passager 8, ainsi qu'un côté arrière 34 délimitant la partie cargo 4 de l'aéronef 1.

A cet égard, il est indiqué que la structure ondulée 30 est agencée verticalement, et prend la forme générale d'une couche perpendiculaire à une direction longitudinale de l'aéronef 1, représentée schématiquement par l'axe 36.

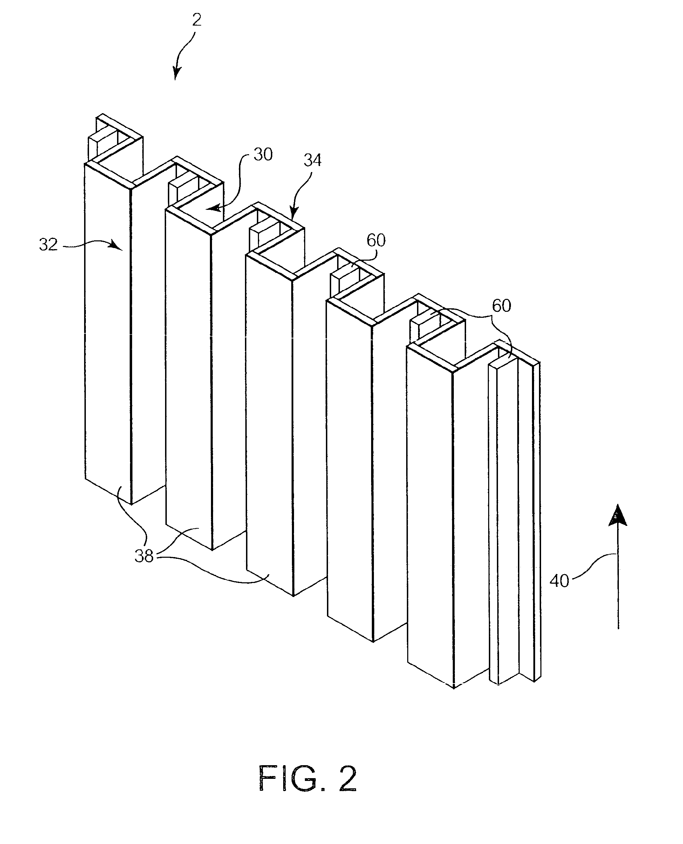

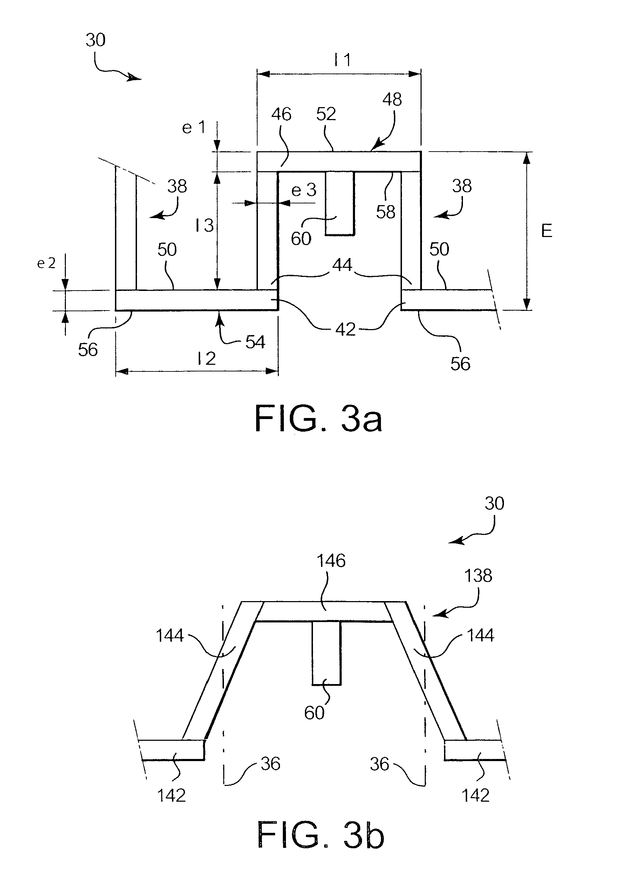

A présent en référence à la figure 2, on peut voir que la structure ondulée 30, apte à s'inscrire dans une forme générale sensiblement parallélépipédique, définit une pluralité d'ondulations 38 parallèles entre-elles et s'étendant chacune sensiblement dans un sens de la hauteur de la cloison 2, représenté schématiquement par la flèche 40. Par ailleurs, comme on peut le mieux l'apercevoir sur les figures 3a et 3b qui seront présentées plus en détails ci-dessous, les ondulations 38 sont à section sensiblement en oméga.

De plus, la cloison 2 présente un ou plusieurs éléments raidisseurs 60 s'étendant préférentiellement selon le sens de la hauteur, et étant rapportés sur la structure 30, par exemple uniquement au niveau du côté arrière 34 de celle-ci, comme cela est représenté sur la figure 2. A cet égard, il est noté que les éléments raidisseurs 60 sont de préférence disposés de la manière explicitée dans le second mode de réalisation préféré qui sera ultérieurement décrit.

En référence tout d'abord à la figure 3a représentant une ondulation 38 vue de dessus de la structure ondulée 30, on peut voir que cette ondulation 38 est réalisée à l'aide d'une pluralité de tôles planes disposées verticalement et solidarisées entre-elles, par exemple par soudage. Comme indiqué précédemment, il est noté que les tôles planes constituant l'ondulation 30 sont agencées de manière à définir une forme d'oméga en section prise selon un plan horizontal.

Pour ce faire, chaque ondulation 30 comporte tout d'abord deux tôles arrière 42 disposées perpendiculairement à la direction longitudinale 36 de l'aéronef 1. Afin de former la base de l'oméga, ces tôles arrière 42 sont espacées l'une de l'autre, mais agencées dans un même plan fictif (non représenté). D'autre part, l'ondulation 30 comprend deux tôles intermédiaires 44 parallèles entre-elles ainsi qu'à la direction longitudinale 36 de l'aéronef 1, ces deux tôles intermédiaires 44 destinées à constituer les branches verticales de l'oméga étant respectivement solidarisées aux deux tôles arrière 42. Enfin, l'ondulation 30 est munie d'une tôle avant 46 formant le sommet de l'oméga, cette tôle avant 46 étant alors bien entendu fixée aux deux tôles intermédiaires 44 et disposée perpendiculairement à la direction longitudinale 36 ainsi qu'à ces mêmes deux tôles intermédiaires 44.

En outre, comme cela apparaît clairement sur la figure 3a, il est précisé que chaque tôle arrière 42 permet de définir deux ondulations 38 directement consécutives. En d'autres termes, les tôles arrière 42 permettent en outre d'établir la jonction entre les différentes ondulations 38 de la structure ondulée 30.

De préférence, les tôles 42,44,46 sont solidarisées deux à deux au niveau de leurs extrémités respectives, et sont chacune réalisées en fibres de carbone. Néanmoins, ces tôles 42,44,46 pourraient être réalisées dans tout autre matériau rigide, sans sortir du cadre de l'invention.

Dans ce premier mode de réalisation préféré de la présente invention, la structure ondulée 30 définie par les tôles 42,44,46 comprend une première surface extérieure 48 constituant le côté avant 32 de la cloison 2, et délimitant par conséquent le compartiment passager 8 de l'aéronef 1. Ainsi, en raison de la présence des ondulations 38 à section sensiblement en oméga, la première surface extérieure 48 présente une alternance de reliefs 52 et de creux 50.

De la même façon, la structure ondulée 30 comprend une seconde surface extérieure 54 constituant le côté arrière 34 de la cloison 2, et délimitant donc la partie cargo 4 de l'aéronef 1. Ainsi, ici encore, la seconde surface extérieure 54 présente une alternance de reliefs 56 et de creux 58.

En référence à présent à la figure 3b représentant la structure ondulée 30 vue de dessus, sous une forme alternative du premier mode de réalisation préféré, on peut apercevoir que seule la forme des ondulations 138 change par rapport à celle des ondulations 38 décrites précédemment.

En effet, celles-ci sont toujours chacune réalisées à l'aide de tôles planes dont deux tôles arrière 142, deux tôles intermédiaires 144, ainsi qu'une tôle avant 146. A cet égard, il est indiqué que si la disposition des tôles arrière 142 et de la tôle avant 146 est sensiblement identique à celle rencontrée pour les tôles arrière 42 et la tôle avant 46, respectivement, les tôles intermédiaires 144 sont quant à elles placées légèrement différemment des tôles intermédiaires 44 de la figure 3a.

Effectivement, les tôles intermédiaires 144 sont toujours disposées verticalement, mais plus parallèlement à la direction longitudinale 36 de l'aéronef 1. Les tôles 144 sont donc positionnées de façon à rester verticales tout en étant inclinées par rapport à la direction longitudinale 36, cette inclinaison par rapport à la direction longitudinale 36 étant de préférence identique pour chacune des tôles 144, et par exemple de l'ordre de 45°. En outre, afin que les tôles 142,144,146 définissent une pluralité de « trapèzes » adjacents, deux tôles intermédiaires 144 quelconques et directement consécutives disposent d'un sens d'inclinaison opposé, comme cela est visible sur la figure 3b.

Il est noté que les structures 30 des figures 3a et 3b sont réalisées à l'aide d'éléments 42, 44, 46, 142, 144 et 146 assemblés entre-eux par exemple par soudage, ou éventuellement par rivetage en prévoyant des parties de recouvrement. De plus, ces structures 30 pourraient également être réalisées à l'aide d'une unique tôle ondulée de façon appropriée.

En référence aux cotes indiquées sur la figure 3a, il est donné un exemple préféré de réalisation de la structure ondulée 30, qui ne tient pas compte de la présence des éléments raidisseurs 60.
- Hauteur « H » de la structure ondulée 30 : 2500 mm
- Longueur « L » de la structure ondulée 30 : 4800 mm
- Epaisseur « E » de la structure ondulée 30 : 316 mm
- Epaisseur « e1 » des tôles avant 46 : 7 mm
- Epaisseur « e2 » des tôles arrière 42 : 7 mm
- Epaisseur « e3 » des tôles intermédiaires 44 : 13 mm
- Largeur « l1 » des tôles avant 46 : 206 mm
- Largeur « l2 » des tôles arrière 42 : 206 mm
- Largeur « l3 » des tôles intermédiaires 44 : 301 mm
- Matériau utilisé pour les tôles planes 42,44,46 : fibres de carbone
- Masse surfacique de la structure ondulée 30 : 25 kg/m²
- Résistance mécanique globale de la structure ondulée 30 : 0,7 MPa

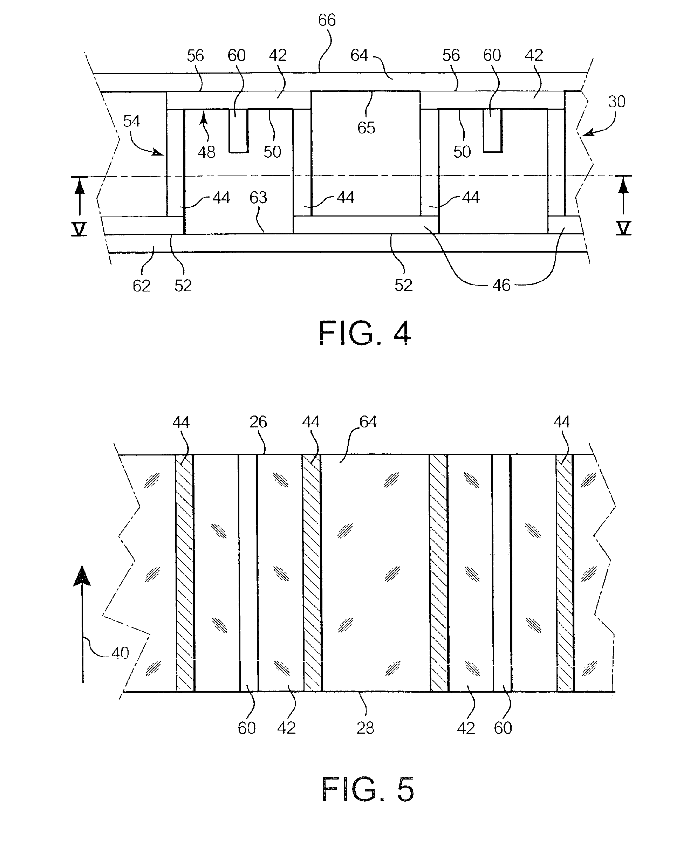

A présent en référence conjointement aux figures 4 et 5, il est représenté une cloison 2 selon un second mode de réalisation préféré de la présente invention.

La cloison 2 comporte préférentiellement une structure ondulée 30 identique ou similaire à celle décrite ci-dessus et représentée sur les figures 1 à 3a.

Aussi, un ou plusieurs éléments raidisseurs 60 sont rapportés sur cette structure ondulée 30, et plus particulièrement sur les éléments arrière 42, au niveau des creux 50 de la première surface extérieure 48.

Ces éléments raidisseurs 60, montés fixement sur la première surface extérieure 48 de la structure ondulée 30, de préférence par soudage, peuvent prendre chacun la forme d'une tôle plane sensiblement rectangulaire, par exemple réalisée en fibres de carbone. Néanmoins, ces éléments raidisseurs 60 pourraient être réalisés dans tout autre matériau rigide, sans sortir du cadre de l'invention.

Les éléments raidisseurs 60 s'étendent tous dans le sens de la hauteur 40 de la cloison 2, de préférence sur sensiblement toute la hauteur de cette cloison 2. Ainsi, ces éléments 60 disposées verticalement sont agencées de façon à définir des lignes droites et parallèles entre le bord inférieur 28 et le bord supérieur 26 de la cloison 2. Préférentiellement, chaque élément arrière 42 est équipé d'un unique élément raidisseur 60.

Naturellement, la disposition, la longueur et le nombre d'éléments raidisseurs 60 peuvent être définis de manière à obtenir une cloison 2 suffisamment résistante mécaniquement pour supporter la charge transportée maximale, soumise à une accélération au moins égale à l'accélération maximale qu'elle peut subir dans le domaine du vol défini pour l'aéronef concerné.

De plus, il a été remarqué qu'avec l'adjonction des ces éléments raidisseurs 60 sur les tôles arrière 42, la masse surfacique de la cloison 2 pouvait être ramenée de 25 kg/m² à moins de 20 kg/m², tout en procurant une même résistance mécanique globale.

Comme cela est le mieux visible sur la figure 4, les éléments raidisseurs 60, en forme de lames et réalisés à l'aide de tôles planes, sont montés fixement sur les creux 50, de façon à ce que ces éléments raidisseurs 60 soient perpendiculaires aux tôles arrière 42. En d'autres termes, les éléments raidisseurs 60 sont en contact avec la première surface extérieure 48 au niveau de leur chant longitudinal.

Toujours dans ce second mode de réalisation préféré de la présente invention, on peut prévoir que la cloison 2 est munie de deux parois extérieures 62,64 prenant en sandwich la structure ondulée 30, et délimitant respectivement le compartiment passager 8 et la partie cargo 4 de l'aéronef 1.

Ainsi, une paroi extérieure avant 62 dispose d'une surface interne 63 en contact avec les reliefs 52 de la première surface extérieure 48 de la structure ondulée 30, tandis qu'une paroi extérieure arrière 64 dispose d'une surface interne 65 en contact avec les reliefs 56 de la seconde surface extérieure 54 de cette même structure ondulée 30. De préférence, la solidarisation des reliefs 52,56 avec les surfaces internes 63,65 s'effectue par soudage.

Toujours à titre indicatif, les parois extérieures 62,64 prennent chacune la forme d'une tôle plane couvrant la totalité de la structure ondulée 30, et sont réalisées en fibres de carbone. Néanmoins, ici encore, ces parois extérieures 62,64 pourraient être réalisées dans tout autre matériau rigide, sans sortir du cadre de l'invention.

En outre, il est précisé que les parois extérieures 62,64 peuvent également être équipées d'éléments raidisseurs secondaires (non représentés), toujours dans le but de réduire la masse globale de la cloison 2 et/ou d'augmenter sa résistance mécanique globale, et afin que celle-ci puisse résister au fret 6 susceptible de prendre appui sur une surface externe 66 de la paroi extérieure arrière 64, lorsque ce fret 6 se détache accidentellement de son emplacement de stockage.

Naturellement, la cloison 2 objet de la présente invention pourrait comporter les parois extérieures 62,64 sans pour autant être munie des éléments raidisseurs 60 et des éléments raidisseurs secondaires.

En référence à présent à la figure 6, il est représenté un exemple de dispositif de fixation 24 destiné à assurer l'assemblage de la cloison 2 sur le reste de la structure de l'aéronef 1. Dans le cas particulier représenté, le dispositif de fixation 24 est agencé de façon à assembler le bord inférieur 28 de la cloison 2 au plancher principal 14 de l'aéronef 1, la cloison 2 étant alors de préférence conçue de manière à ne pas comporter de paroi extérieure avant 62.

Comme cela est clairement visible sur la figure 6, le dispositif de fixation 24, appelé « dispositif à doigt », est logé à l'intérieur d'une ondulation 38. Il comporte un flan vertical 68 de section en forme générale de U, ce flan vertical 68 épousant la première surface extérieure 48 de cette ondulation 30. En d'autres termes, le flan vertical 68 est pourvu de trois sections respectivement en contact et solidarisées, par exemple par soudage, à deux tôles intermédiaires 44 directement successives ainsi qu'à la tôle arrière 42 située entre ces deux mêmes tôles intermédiaires 44.

D'autre part, des nervures 70 sont pratiquées entre le flan vertical 68 et un alésage vertical 72 de dispositif 24 pratiqué à l'intérieur du U formé par ce même flan vertical 68, l'alésage 72 reposant sur un support horizontal percé 74 supportant également le flan vertical 68.

L'ensemble formé par le flan vertical 68, les nervures 70, l'alésage vertical 72 et le support horizontal 74 peut être réalisé d'une seule pièce par moulage. De plus, afin d'assurer la fixation de cet ensemble sur le plancher principal 14, le dispositif 24 est également muni d'un axe (non représenté) destiné à coopérer avec l'alésage vertical 72 et ce même plancher principal 14.

Bien entendu, diverses modifications peuvent être apportées par l'homme du métier à l'aéronef 1 et aux cloisons 2 qui viennent d'être décrits, uniquement à titre d'exemples non limitatifs.

## Revendications

1. Cloison (2) pour aéronef (1) destinée à séparer une partie cargo (4) d'un cockpit (12) ou d'un compartiment passager (8) de cet aéronef, ladite cloison (2) comportant une structure ondulée (30) définissant une pluralité d'ondulations (38) à section sensiblement en oméga, **caractérisée en ce que** chaque ondulation (38) s'étend sensiblement dans un sens de la hauteur (40) de ladite cloison, et **en ce que** des éléments raidisseurs (60) sont rapportés sur ladite structure ondulée (30) en s'étendant également dans le sens de la hauteur (40) de ladite cloison (2).

2. Cloison (2) pour aéronef (1) selon la revendication 1, **caractérisée en ce que** chaque ondulation (38) est réalisée à l'aide d'une pluralité de tôles planes (42, 44, 46, 142, 144, 146).

3. Cloison (2) pour aéronef (1) selon l'une quelconque des revendications précédentes, **caractérisée en ce que** chaque élément raidisseur (60) prend la forme d'une tôle plane.

4. Cloison (2) pour aéronef (1) selon l'une quelconque des revendications précédentes, **caractérisée en ce que** ladite structure ondulée (30) comprend une première surface extérieure (48) ainsi qu'une seconde surface extérieure (54) opposée à ladite première surface extérieure, et **en ce que** chacune des première et seconde surfaces extérieures (48,54) présente une alternance de reliefs (52,56) et de creux (50,58).

5. Cloison (2) pour aéronef (1) selon la revendication 4, **caractérisée en ce qu'**elle comporte en outre au moins une paroi extérieure (62,64) en appui contre les reliefs (52,56) de l'une desdites surfaces extérieures (48,54) de la structure ondulée (30).

6. Cloison (2) pour aéronef (1) selon la revendication 5, **caractérisée en ce que** chaque paroi extérieure (62,64) prend la forme d'une tôle plane.

7. Cloison (2) pour aéronef (1) selon la revendication 5 ou la revendication 6, **caractérisée en ce que** la structure ondulée (30) est agencée entre deux parois extérieures (62,64) disposées de façon parallèle.

8. Cloison (2) pour aéronef (1) selon l'une quelconque des revendications 6 à 8, **caractérisée en ce qu'**au moins un élément raidisseur secondaire est rapporté sur au moins une paroi extérieure (62,64).

9. Cloison (2) pour aéronef (1) selon l'une quelconque des revendications précédentes, **caractérisée en ce qu**'elle est réalisée en fibres de carbone.

10. Aéronef (1) comportant au moins une cloison (2) séparant une partie cargo (4) d'un cockpit (12) ou d'un compartiment passager (8) de cet aéronef, **caractérisé en ce qu**'au moins une cloison (2) séparant une partie cargo (4) du cockpit (12) ou d'un compartiment passager (8) est une cloison selon l'une quelconque des revendications précédentes.

11. Aéronef (1) selon la revendication 10, **caractérisé en ce qu**'au moins une cloison (2) séparant une partie cargo (4) du cockpit (12) ou d'un compartiment passager (8) est fixée au fuselage (16) de cet aéronef (1) uniquement par un bord supérieur (26) et un bord inférieur (28) de ladite cloison (2).

## Claims

1. Partition (2) for aircraft (1) designed to separate a cargo part (4) from a cockpit (12) or a passenger compartment (8) of this aircraft, said partition (2) comprising a corrugated structure (30) defining several corrugations (38) with an approximately omega section, **characterized in that** each corrugation (38) extends approximately along the direction of the height (40) of the said partition and **in that** stiffener elements (60) are added to said corrugated structure (30) also extending in the direction of the height (40) of said partition (2).

2. Partition (2) for aircraft (1) according to claim 1, **characterized in that** each corrugation (38) is made using several planar plates (42, 44, 46, 142, 144, 146).

3. Partition (2) for aircraft (1) according to any one of the previous claims, **characterized in that** each stiffener element (60) is in the form of a planar plate.

4. Partition (2) for aircraft (1) according to any one of the previous claims, **characterized in that** said corrugated structure (30) comprises a first outside surface (48) and a second outside surface (54) opposite to said first outside surface, and **in that** each of the first and second outside surfaces (48, 54) has an alternation of relief (52, 56) and recesses (50, 58).

5. Partition (2) for aircraft (1) according to claim 4, **characterized in that** it also comprises at least one external wall (62, 64) bearing in contact with the relief (52, 56) of one of said outside surfaces (48, 54) of the corrugated structure (30).

6. Partition (2) for aircraft (1) according to claim 5, **characterized in that** each external wall (62, 64) is in the form of a planar plate.

7. Partition (2) for aircraft (1) according to claim 5 or to claim 6, **characterized in that** the corrugated structure (30) is arranged between two external walls (62, 64) laid out parallel to each other.

8. Partition (2) for aircraft (1) according to any one of claims 5 to 7, **characterized in that** at least one secondary stiffener element is added to at least one external wall (62, 64).

9. Partition (2) for aircraft (1) according to any one of the previous claims, **characterized in that** the partition is made from carbon fibres.

10. Aircraft (1) comprising at least one partition (2) separating a cargo part (4) from a cockpit (12) or a passenger compartment (8) of this aircraft, **characterized in that** at least one partition (2) separating a cargo part (4) from the cockpit (12) or a passenger compartment (8) is a partition according to any one of the previous claims.

11. Aircraft (1) according to claim 10, **characterized in that** at least one partition (2) separating a cargo part (4) from the cockpit (12) or a passenger compartment (8) is fixed to the fuselage (16) of this aircraft (1) only by an upper edge (26) and a lower edge (28) of said partition (2).

## Patentansprüche

1. Trennwand (2) für ein Luftfahrzeug (1), das zum Trennen eines Frachtraumteils (4) von einem Cockpit (12) oder einem Passagierraum (8) dieses Luftfahrzeugs vorgesehen ist, wobei die Trennwand (2) eine gewellte Struktur (30) aufweist, die eine Vielzahl von Wellungen (38) mit einem Querschnitt im wesentlichen in Omega-Form festlegt, **dadurch gekennzeichnet, dass** jede Wellung (38) sich im wesentlichen in einer Höhenrichtung (40) der Trennwand erstreckt, und dass Versteifungselemente (60) auf die gewellte Struktur (30) aufgebracht sind und sich ebenfalls in der Höhenrichtung (40) der Trennwand (2) erstrecken.

2. Trennwand (2) für ein Luftfahrzeug (1) nach Anspruch 1, **dadurch gekennzeichnet, dass** jede Wellung (38) mittels mehrerer planer Bleche (42,44,46,142,144,146) hergestellt ist.

3. Trennwand (2) für ein Luftfahrzeug (1) nach einem der vorangehenden Ansprüche, **dadurch gekennzeichnet, dass** jedes Versteifungselement (60) die Form eines planen Blechs annimmt.

4. Trennwand (2) für ein Luftfahrzeug (1) nach einem der vorangehenden Ansprüche, **dadurch gekennzeichnet, dass** die gewellte Struktur (30) eine erste Außenfläche (48) sowie eine zweite Außenfläche (54) gegenüber der ersten Außenfläche aufweist, und dass jede der ersten und zweiten Außenflächen (48,54) abwechselnd Erhebungen (52,56) und Vertiefungen (50,58) aufweist.

5. Trennwand (2) für ein Luftfahrzeug (1) nach Anspruch 4, **dadurch gekennzeichnet, dass** sie außerdem mindestens eine Außenwand (62,64) aufweist, die an den Erhebungen (52,56) einer der Außenflächen (48,54) der gewellten Struktur (30) anliegt.

6. Trennwand (2) für ein Luftfahrzeug (1) nach Anspruch 5, **dadurch gekennzeichnet, dass** jede Außenwand (62,64) die Form eines planen Blechs annimmt.

7. Trennwand (2) für ein Luftfahrzeug (1) nach Anspruch 5 oder Anspruch 6, **dadurch gekennzeichnet, dass** die gewellte Struktur (30) zwischen zwei parallel angeordneten Außenwänden (62,64) angeordnet ist.

8. Trennwand (2) für ein Luftfahrzeug (1) nach einem der Ansprüche 6 bis 8, **dadurch gekennzeichnet, dass** mindestens ein Sekundär-Versteifungselement auf mindestens eine Außenwand (62,64) aufgebracht ist.

9. Trennwand (2) für ein Luftfahrzeug (1) nach einem der vorangehenden Ansprüche, **dadurch gekennzeichnet, dass** sie aus Kohlenstofffasern hergestellt ist.

10. Luftfahrzeug (1) mit mindestens einer Trennwand (2), die einen Frachtraumteil (4) von einem Cockpit (12) oder einem Passagierraum (8) dieses Luftfahrzeugs trennt, **dadurch gekennzeichnet, dass** mindestens eine Trennwand (2), die einen Frachtraumteil (4) vom Cockpit (12) oder von einem Passagierraum (8) trennt, eine Trennwand gemäß einem der vorangehenden Ansprüche ist.

11. Luftfahrzeug (1) nach Anspruch 10, **dadurch gekennzeichnet, dass** mindestens eine Trennwand (2), die einen Frachtraumteil (4) von dem Cockpit (12) oder einem Passagierraum (8) trennt, am Rumpf (16) dieses Luftfahrzeugs (1) lediglich über einen oberen Rand (26) und einen unteren Rand (28) der Trennwand (2) befestigt ist.
